# EUROPÄISCHE PATENTSCHRIFT

(11) **EP 1 387 738 B1**
(45) Veröffentlichungstag und Bekanntmachung des Hinweises auf die Patenterteilung: **10.01.2007**
(21) Anmeldenummer: 02740262.7
(22) Anmeldetag: 19.04.2002
(51) Int. Cl.: B24B 3/36, B24B 3/40, B24B 41/00, B24B 41/06

(54) **VORRICHTUNG ZUM SCHLEIFEN VON CUTTERMESSERN**
DEVICE FOR SHARPENING CUTTER BLADES
DISPOSITIF POUR AFFUTER DES LAMES D'OUTILS DE COUPE

(30) Priorität: 17.05.2001 DE 10124319
(43) Veröffentlichungstag der Anmeldung: 11.02.2004
(73) Patentinhaber: KNECHT MASCHINENBAU GMBH, D-88368 Bergatreute (DE)
(72) Erfinder: KNECHT, Manfred, 88368 Bergatreute (DE); HEINE, Peter, 88285 Bodnegg (DE)
(74) Vertreter: Roth, Klaus
(86) Internationale Anmeldenummer: PCT/DE2002/001446
(87) Internationale Veröffentlichungsnummer: WO 2002/092281

(56) Entgegenhaltungen:
- DE-A- 10 021 302
- DE-B- 2 622 441
- DE-U- 20 006 415
- GB-A- 372 891
- US-A- 4 267 669

## Beschreibung

Die Erfindung betrifft eine Vorrichtung zum Schleifen von Cuttermessern nach dem Oberbegriff des Anspruchs 1 (siehe z.B GB-A-372 891).

Sogenannte Cutter werden in der Herstellung von Fleisch- und Wurstwaren benutzt, um das Fleisch- bzw. Wurstmaterial zu zerkleinern. Hierbei werden mehrere sogenannte Cuttermesser winkelversetzt hintereinander auf einer Drehwelle angeordnet. Diese Messeranordnung rotiert mit vergleichsweise hohen Drehzahlen innerhalb einer ringförmigen sich drehenden Cutterwanne. Die Cuttermesser weisen hierbei zum Einen je nach gewünschtem Herstellungsprodukt spezielle Formen auf und müssen zum Anderen stets in einem äußerst scharfen Zustand gehalten werden, um ein gutes Arbeitsergebnis zu erzielen.

Auf Grund ihrer speziellen Form werden Cuttermesser auch heutzutage noch vielfach von Hand ggf. unter zur Hilfenahme von manuellen Führungsmechanismen an einer Schleifmaschine geschliffen (vgl. DE 198 368 04).

Mittlerweile ist eine Schleifvorrichtung im Handel, mittels der ein in einer Schleifaufnahme fixiertes Cuttermesser automatisch mit seiner Kontur an einem Schleifwerkzeug vorbei geführt wird.

Bei dieser Vorrichtung wird das geschliffene Messer von Hand eingelegt und wieder entnommen. Eine Bedienperson muss daher ständig für das Schleifen der Cuttermesser bereitgestellt werden. Darüber hinaus ist die manuelle Handhabung von Cuttermessern auf Grund des Messergewichts und der extrem scharf geschliffenen Schneiden nicht ungefährlich.

Ausgehend von einer solchen Vorrichtung ist es die Aufgabe der Erfindung, den Personalaufwand für das Schleifen zu reduzieren und die Handhabung der Cuttermesser zu verbessern.

Diese Aufgabe wird ausgehend von einer Vorrichtung der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung, möglich.

Dementsprechend zeichnet sich eine erfindungsgemäße Vorrichtung dadurch aus, dass ein Cuttermessermagazin und ein Wechselwerkzeug zum Austausch eines geschliffenen Cuttermessers gegen ein noch zu schleifendes Cuttermesser vorgesehen ist.

Auf diese Weise kann in einem Arbeitsgang eine Vielzahl von Messern, beispielsweise ein kompletter Messersatz für einen Cutter in dem Magazin zum Schleifen bereitgestellt und von der Vorrichtung selbsttätig bearbeitet werden. Der Personalaufwand wird hierzu deutlich reduziert. Auch die Unfallgefahr wird hierdurch verringert, da die Aufnahme vom Messermagazin sowie die Ablage auf dem Messermagazin des geschliffenen Cuttermessers maschinell erfolgt.

In einer besonders vorteilhaften Ausführungsform der Erfindung fasst das Cuttermessermagazin wenigstens zwei Magazinplatten, auf denen jeweils wenigstens ein Cuttermesser abgelegt werden kann. Solche Magazinplatten haben sich dahingehend bewährt, dass sie zum Einen gut aufeinander stapelbar und somit leicht zu handhaben sind und zum Anderen eine positionsgenaue Aufnahme bzw. Ablage der Cuttermesser von oben problemlos möglich ist.

In einer weiteren vorteilhaften Ausführungsform der Erfindung werden Abstandshalter zwischen einzelnen Magazinplatten vorgesehen. Derartige Abstandshalter verhindern bei einem Magazin mit mehreren aufeinander gestapelten Platten, dass die Magazinplatten auf den auf die Magazinplatten aufgelegten Cuttermessern aufliegen. Mit Hilfe derartiger Abstandshalter ist damit eine positionsgenaue Stapelung einzelner Magazinplatten möglich.

In einer weiteren besonderen Ausführungsform der Erfindung werden zusätzlich ein oder mehrere Positionierungselemente vorgesehen, um die einzelnen Magazinplatten beim Aufeinanderstapeln definiert zueinander zu positionieren. Ein derartiges Positionierelement kann beispielsweise in Form eines kegelförmigen Abstandshalters ausgebildet werden, der an der Ober- oder Unterseite einer Magazinplatte angebracht ist und in eine entsprechende Kegelbohrung einer benachbarten gegenüberliegenden Platte beim Stapeln eingreift.

Weiterhin wird vorteilhafterweise ein Positionierelement zur Positionierung eines Cuttermessers auf einer Magazinplatte vorgesehen. Ein solches Positionierelement kann beispielsweise in Form von Fixierbolzen ausgebildet werden, die von der Oberfläche der Magazinplatten abstehen und in entsprechende Bohrungen der Cuttermesser beim Auflegen der Cuttermesser eingreifen. Derartige Bohrungen sind üblicherweise bei Cuttermessern zur Fixierung im Cutter bereits vorhanden. Eine definierte Positionierung der Cuttermesser auf den Magazinplatten ist für eine präzise Aufnahme und Ablage der Cuttermesser durch das Wechselwerkzeug von Bedeutung.

In einer weiteren besonders vorteilhaften Ausführungsform wird das Wechselwerkzeug als Saugheber ausgebildet. Ein Saugheber stellt ein preiswert herstellbares und sehr effektives Hebewerkzeug für Cuttermesser dar, die mit ihrer im Wesentlichen ebenen Form dem Einsatz eines Saughebers entgegenkommen. Darüber hinaus ist ein Saugheber zugleich zum Umstapeln von Magazinplatten verwendbar, die beispielsweise aus Kunststoff bestehen können und von anderen Heberarten, beispielsweise von Magnethebern nicht zu bewegen sind.

Vorteilhafterweise wird die Schleifaufnahme wenigstens bei aufliegendem Messer mit Unterdruck beaufschlagbar ausgebildet.

Insbesondere in Kombination mit einem Saugheber als Wechselwerkzeug, bei dem ohnehin eine Vakuumeinheit vorgehen ist, steht ein solcher Unterdruck für die Fixierung des zu schleifenden Cuttermessers auf der Schleifaufnahme ohne zusätzlichen Aufwand zur Verfügung. Darüber hinaus ist eine Unterdruck- bzw. Vakuumhalterung im Hinblick auf die Fixierung und das Lösen des zu schleifenden Cuttermessers leicht zu steuern.

Weiterhin kann in einer besonders vorteilhaften Weiterbildung dieser Ausführungsform ein Unterdruck bzw. Vakuumschalter zur Messererkennung verwendet werden, da der gewünschte Unterdruck sich nur bei auf der Schleifaufnahme aufliegendem Cuttermesser erzeugen lässt.

Vorzugsweise wird die Schleifaufnahme lösbar mit einem Aufnahmeträger verbunden. Auf diese Weise kann die Schleifaufnahme schnell und problemlos aus der Vorrichtung entnommen und gegen eine andere Schleifaufnahme ersetzt werden. Dies ist von besonderer Bedeutung, da die Schleifaufnahmen gegebenenfalls für unterschiedlich geformte Cuttermesser unterschiedlich ausgeführt sein muss.

Vorzugsweise wird auch die Schleifaufnahme als Platte ausgebildet, die lösbar mit einer Trägerplatte verbunden wird. Eine plattenförmige Schleifaufnahme nutzt die flache Bauform eines Cuttermessers zur Fixierung auf der Schleifaufnahme mit Hilfe von Unterdruck oder Vakuum auf besonders einfache Weise.

Zugleich kann eine plattenförmige Schleifaufnahme mit wenig Aufwand lösbar mit einer Trägerplatte verbunden werden. Hierzu kommen beispielsweise Schnellspannvorrichtungen nach Art eines Bajonettverschlusses oder dergleichen in Frage, die auf der Trägerplatte angebracht und in verspanntem Zustand entsprechende Bereiche der Schleifaufnahme hintergreifen. Gegebenenfalls sind in der Schleifaufnahme entsprechende Durchlässe für derartige Schnellspannvorrichtungen vorzusehen.

In einer bestimmten Ausführungsform der Erfindung wird das Schleifwerkzeug in seiner Position fixiert angeordnet, während der Aufnahmeträger mit angebrachter Schleifaufnahme und dort fixiertem Cuttermesser an dem Schleifwerkzeug konturengetreu entlang geführt wird. Hierzu ist der Aufnahmeträger vorteilhafterweise nicht nur verfahrbar, sondern auch drehbar ausgebildet.

In einer besonderen Weiterbildung dieser Ausführungsform wird die Drehachse rohrförmig ausgebildet, so dass der Unterdruck durch dieses Trägerrohr und eine anschließende Bohrung in der Trägerplatte auf der dem Cuttermesser zugewandten Seite der Schleifaufnahme erzeugt werden kann.

Ein Ausführungsbeispiel ist in der Zeichnung dargestellt und wird anhand der Figuren näher erläutert.

Im Einzelnen zeigen
- Fig. 1: Eine Draufsicht auf einen Teil einer erfindungsgemäßen Vorrichtung
- Fig. 2: Eine Seitenansicht des in Figur 2 dargestellten Teils der Vorrichtung.

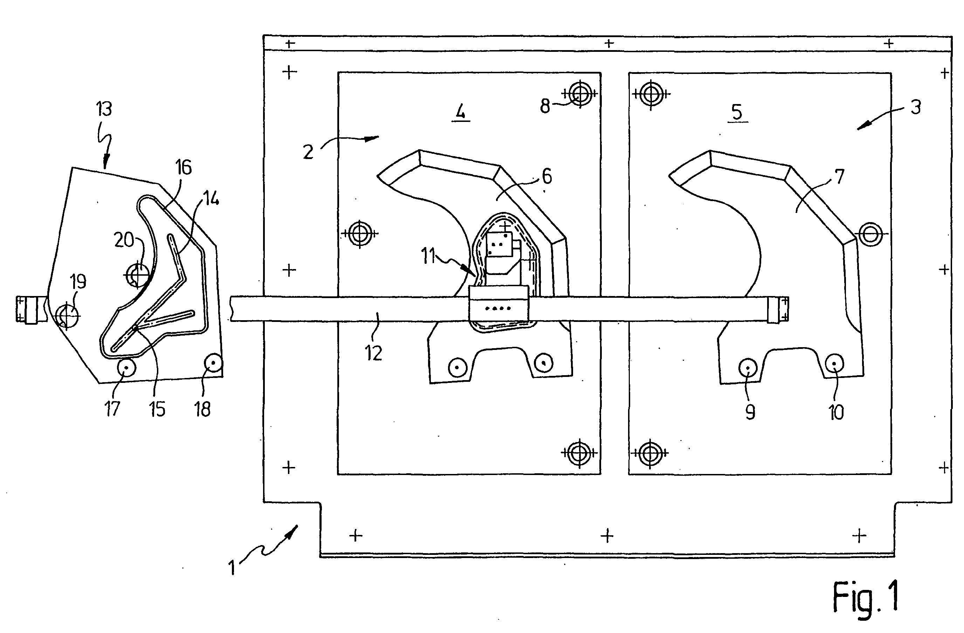

Zu Figur 1 ist ein Messermagazin 1 in Form von zwei Stapeln 2, 3 von Magazinplatten 4, 5 dargestellt. Auf den Magazinplatten 4, 5 ist jeweils ein Cuttermesser 6, 7 abgelegt.

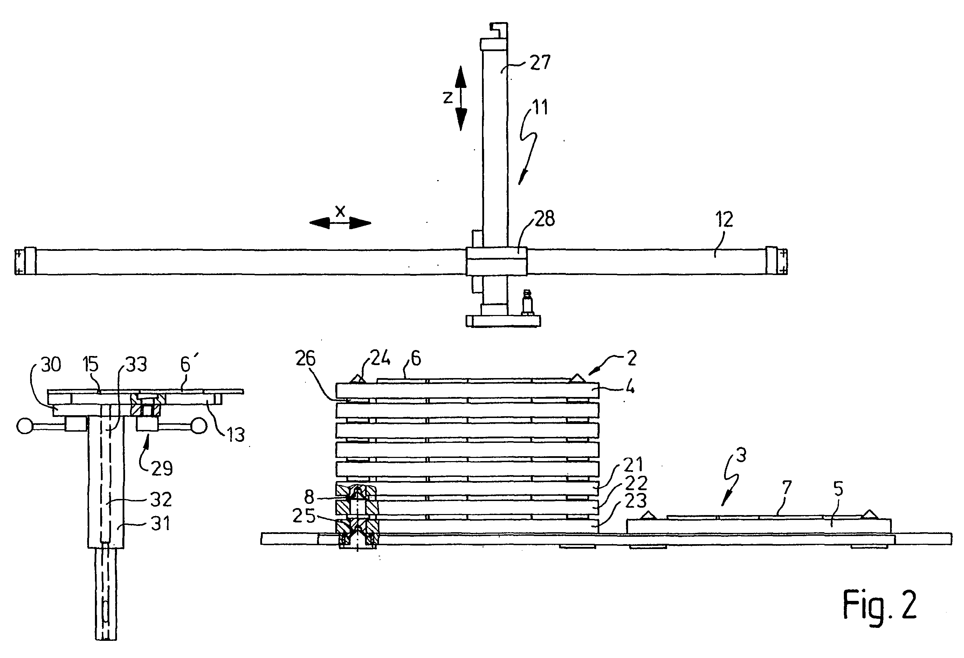

Die Magazinplatten 4, 5 sind mit jeweils drei kegelförmigen Abstandshaltern 8 versehen, deren Form in der Darstellung gemäß Figur 2 besser erkennbar ist.

Weiterhin sind die Magazinplatten 4, 5 mit Fixierbolzen 9, 10 versehen, die entsprechende Bohrungen in den Cuttermessern 6, 7 durchsetzen.

Eine Sauggeber 11 ist entlang einer Achse 12 verfahrbar angeordnet und kann somit über beiden Plattenstapel 2, 3 positioniert werden.

Die Achse 12 ist unterbrochen dargestellt und setzt sich, wie Figur 2 erkennbar, bis zu einer Schleifaufnahme 13 fort, die ebenfalls plattenförmig ausgebildet ist und Nuten 14 aufweist, die mit einem Druckkanal 15 verbunden sind. Die Nuten 14 sind von einer Dichtung 16 umschlossen, deren Verlauf in etwa dem ebenen Teil der zu schleifenden Cuttermesser 6, 7 entspricht. Weiterhin sind zur exakten Positionierung der Cuttermesser 6, 7 auf der Schleifaufnahme 13 auch an der Schleifaufnahme 13 Fixierbolzen 17, 18 vorgesehen. Die Schleifaufnahme 13 umfasst weiterhin Bohrungen 19, 20, deren Form derart ausgebildet ist, dass sie mit einem Schnellspannelement nach Art eines Bajonettverschlusses zusammenwirken können.

In der Darstellung gemäß Figur 2 sind die Plattenstapel 2, 3 in der Seitenansicht erkennbar, wobei auf jeder der zu den Plattenstapeln 2, 3 gehörenden Magazinplatten jeweils ein Cuttermesser aufgelegt ist, wie dies anhand der Magazinplatten 4, 5 sowie Cuttermesser 6, 7 veranschaulicht ist. Die unteren drei Magazinplatten 21, 22, 23 sind teilweise geschnitten dargestellt, sodass die Anordnung und Form sowie die Wirkungsweise der Abstandshalter 8 sichtbar ist.

Die kegelförmige Spitze der Abstandshalter 8 taucht in einen entsprechende komplementäre kegelförmige Ausnehmung der Unterseite der Magazinplatten 4, 5 ein. In der vorliegenden Ausführungsform sind sowohl die Spitze 24 als auch die kegelförmige Ausnehmung auf der Unterseite der Magazinplatten 4, 5 in dem gleichen als Abstandshalter 8 dienenden, bolzenförmigen Bauelement anbracht. Dieser Abstandshalter 8 ist an der Unterseite mit einer Auskragung 26 versehen, die an der jeweiligen Magazinplatte 4, 5 nach dem Eindrücken des Abstandshalters 8 in entsprechende Bohrungen in den Magazinplatten 4, 5 an der Unterseite der Magazinplatten 4, 5 anschlägt.

Die Abstandshalter 8 in gemäß diesem Ausführungsbeispiel sorgen demnach nicht nur für einen zuverlässigen Abstand, durch den Platz für die Cuttermesser 6, 7 zwischen verschiedenen Magazinplatten 4, 5 geschaffen wird, sondern zugleich auch für eine exakte Positionierung der einzelnen übereinander gestapelten Magazinplatten 4.

Die Ausgestaltung des Abstandshalters 8 als bolzenförmiges Element mit Spitze und unterseitiger Ausnehmung ergibt zudem eine besonders günstige Fertigung für derartige Abstandshalter 8.

Der Saugheber 11 ist wie bereits oben erwähnt entlang der Achse 12 in Richtung des Doppelpfeils x verschiebbar und über einen Ausleger 27, der in einem Schlitten 28 verfahrbar gelagert ist, auch nach oben bzw. unten in Richtung des Doppelpfeils z beweglich.

In Figur 2 ist weiterhin erkennbar, dass die Schleifaufnahme 13, auf der vorliegend ein Cuttermesser 6' aufgelegt ist, mit Hilfe einer Schnellverspannung 29 anhand eines Bajonettverschlusses auf einer Trägerplatte 30 lösbar und somit leicht austauschbar befestigt ist, die ihrerseits mit einem Trägerrohr 31 verbunden ist.

Im Inneren des Trägerrohrs 31 ist eine Unterdruckleitung 32 vorgesehen, die sich über eine Durchgangsbohrung 33 und eine nicht näher dargestellte Querverbindung bis zum Druckkanal 15 der Schleifaufnahme 13 fortsetzt. Die Querverbindung zwischen der Durchgangsbohrung 33 und dem Druckkanal 15 kann beispielsweise durch eine Nut auf der Unterseite der Schleifaufnahme 13 bzw. der oberen Seite der Trägerplatte 30 bewerkstelligt werden, die nach Außen hin von einer Ringdichtung umgeben ist.

Die Schleifaufnahme 13 ist über das Trägerrohr 31 um die Mittelachse des Trägerrohrs drehbar und auf nicht näher dargestellte Weise auch verfahrbar angeordnet.

Die erfindungsgemäße Vorrichtung arbeitet dergestalt, dass ein Plattenstapel 4 mit Cuttermessern 6 bestückt und in die in den Figuren 1 und 2 dargestellte Position gebracht wird. Anschließend wird über den Saugheber 11 das oberste Cuttermesser 6 von der obersten Magazinplatte 4 entnommen und in die Position 6' auf der Schleifaufnahme 13 gebracht und dort abgelegt. Über die Fixierbolzen 17, 18 wird das Cuttermesser 6' dort exakt positioniert und mit Hilfe eines Unterdrucks, der zwischen dem Cuttermesser 6' und der Schleifaufnahme 13 durch die Nuten 14 und den Druckkanal 15 beaufschlagt ist, dort fest fixiert. Nunmehr wird die gesamte Schleifaufnahme 13 mitsamt Trägerplatte 30 und Trägerrohr 31 zu einem nicht näher dargestellten Schleifwerkzeug verfahren, wo das Cuttermesser 6' beispielsweise durch Abfahren der Messerkontur mit Hilfe der verfahrbaren Schleifaufnahme 13 geschliffen wird.

In der Zwischenzeit ist der Saugheber 11 in der Lage, die oberste Magazinplatte 4 vom Plattenstapel 2 abzuheben und auf den Plattenstapel 3 abzulegen. Nach dem Schleifen des Cuttermessers 6' kann dieses wiederum mit dem Saugheber 11 von der Schleifaufnahme 13 entnommen und auf seine ursprüngliche Magazinplatte, die sich jedoch nunmehr im Plattenstapel 3 an oberster Position befindet, abgelegt werden. Durch das Umstapeln der obersten Magazinplatte 4 vom Plattenstapel 2 auf den Plattenstapel 3 wird zugleich das nächste zu schleifende Cuttermesser auf der nächstoberen Magazinplatte des Plattenstapels 2 für die Entnahme mittels des Saughebers 11 freigelegt.

Mit Hilfe der erfindungsgemäßen Vorrichtung kann nunmehr eine Vielzahl von Cuttermessern 6, 7 in selbsttätiger Weise geschliffen werden, wodurch sich zum einen der Personalaufwand und zum anderen die Verletzungsgefahr deutlich vermindert. Das dargestellte Ausführungsbeispiel stellt eine besonders leicht zu realisierende Ausführungsvariante dar, bei der auch eine Handhabung der Cuttermesser 6, 7 zur Bestückung des Magazins 1 mit Cuttermessern 6, 7 bzw. zur Entnahme der geschliffenen Cuttermessern 6, 7 ohne größere Verletzungsgefahr möglich ist.

### Bezugszeichenliste:

- 1: Messermagazin
- 2: Plattenstapel
- 3: Plattenstapel
- 4: Magazinplatten
- 6: Cuttermesser
- 7: Cuttermesser
- 8: Abstandshalter
- 9: Fixierbolzen
- 10: Fixierbolzen
- 11: Saugheber
- 12: Achse
- 13: Schleifaufnahme
- 14: Nut
- 15: Druckkanal
- 16: Dichtung
- 17: Fixierbolzen
- 18: Fixierbolzen
- 19: Bohrung
- 20: Bohrung
- 21: Magazinplatte
- 22: Magazinplatte
- 23: Magazinplatte
- 24: Spitze
- 25: Ausnehmung
- 26: Auskragung
- 27: Ausleger
- 28: Schlitten
- 29: Schnellverspannung
- 30: Trägerplatte
- 31: Trägerrohr
- 32: Unterdruckleitung
- 33: Durchgangsbohrung

## Patentansprüche

1. Vorrichtung zum Schleifen von Cuttermessern mit einem Schleifwerkzeug und einer Schleifaufnahme, durch die ein Cuttermesser während des Schleifvorgangs gehalten wird, wobei die Schleifaufnahme und/oder das Schleifwerkzeug gegeneinander verfahrbar sind und wobei eine Führung zum Abfahren der Cuttermesserkontur an bzw. mit dem Schleifwerkzeug vorgesehen ist, **dadurch gekennzeichnet, dass** ein Cuttermessermagazin (1) und ein Wechselwerkzeug (11) zum Austausch des in der Schleifaufnahme (13) befindlichen Cuttermessers (6, 6') vorgesehen ist, wobei das Wechselwerkzeug (11) zum Umstapeln von Mitteln (4, 5) zur Aufnahme der Cuttermesser (1) vorgesehen ist.

2. Vorrichtung nach Anspruch 1, **dadurch gekennzeichnet, dass** das Cuttermessermagazin (1) wenigstens zwei Magazinplatten (4, 5) umfasst.

3. Vorrichtung nach einem der vorgenannten Ansprüche, **dadurch gekennzeichnet, dass** wenigstens ein Abstandshalter (8) zwischen zwei Magazinplatten (21, 22, 23) vorgesehen ist.

4. Vorrichtung nach einem der vorgenannten Ansprüche, **dadurch gekennzeichnet, dass** ein Positionierelement (8) zur exakten Positionierung zweier Magazinplatten (21, 22, 23) zueinander vorgesehen ist.

5. Vorrichtung nach einem der vorgenannten Ansprüche, **dadurch gekennzeichnet, dass** ein Positionierungselement (9) zur exakten Positionierung eines Cuttermessers (6, 7) auf einer Magazinplatte (4, 5) vorgesehen ist.

6. Vorrichtung nach einem der vorgenannten Ansprüche, **dadurch gekennzeichnet, dass** wenigstens ein Fixierbolzen (9) an einer Magazinplatte (4, 5) vorgesehen ist, der beim Auflegen eines Cuttermessers (6, 7) in eine entsprechend Ausnehmung des Cuttermessers (6, 7) eingreift.

7. Vorrichtung nach einem der vorgenannten Ansprüche, **dadurch gekennzeichnet, dass** das Wechselwerkzeug einen Saugheber (11) umfasst.

8. Vorrichtung nach einem der vorgenannten Ansprüche, **dadurch gekennzeichnet, dass** die Schleifaufnahme (13) wenigstens bei aufgelegtem Messer (6') mit Unterdruck beaufschlagbar ist.

9. Vorrichtung nach einem der vorgenannten Ansprüche, **dadurch gekennzeichnet, dass** ein Unterdruckschalter zur Messererkennung vorgesehen ist.

10. Vorrichtung nach einem der vorgenannten Ansprüche, **dadurch gekennzeichnet, dass** die Schleifaufnahme (13) lösbar an einem Aufnahmeträger (30, 31) befestigt ist.

11. Vorrichtung nach einem der vorgenannten Ansprüche, **dadurch gekennzeichnet, dass** die Schleifaufnahme (13) und/oder der Aufnahmeträger (30) als Platte ausgebildet ist.

12. Vorrichtung nach einem der vorgenannten Ansprüche, **dadurch gekennzeichnet, dass** der Aufnahmeträger (13) mit einem Trägerrohr (31) verbunden ist, durch das ein Unterdruck auf der einem aufgelegten Cuttermesser (6') zugewandten Seite der Schleifaufnahme (13) zu erzeugen ist.

## Claims

1. Device for sharpening cutter blades with a sharpening tool and a sharpening mount, by means of which a cutter blade is held during the sharpening process, whereby the sharpening mount and/or the sharpening tool can be mutually displaced and whereby a guide is provided for wearing down the cutter blade contour on or with the sharpening tool, **characterised in that** a cutter blade magazine (1) and a changing tool (11) are provided for exchanging the cutter blade (6, 6') located in the sharpening mount (13), whereby the changing tool (11) is used for restacking means (4, 5) for mounting the cutter blade (1).

2. Device according to claim 1, **characterised in that** the cutter blade magazine (1) comprises at least two magazine plates (4, 5).

3. Device according to one of the preceding claims, **characterised in that** at least one spacer (8) is provided between two magazine plates (21, 22, 23).

4. Device according to one of the preceding claims, **characterised in that** a positioning element (8) is provided for the exact positioning of two magazine plates (21, 22, 23) relative to one another,

5. Device according to one of the preceding claims, **characterised in that** a positioning element (9) is provided for the exact positioning of a cutter blade (6, 7) on a magazine plate (4, 5).

6. Device according to one of the preceding claims, **characterised in that** at least one fixing bolt (9) is provided on a magazine plate (4, 5), which engages in a corresponding recess of the cutter blade (6, 7) when positioning a cutter blade (6, 7).

7. Device according to one of the preceding claims, **characterised in that** the changing tool comprises a suction lifter (11).

8. Device according to one of the preceding claims, **characterised in that** the sharpening mount (13) can be vacuum charged at least with a positioned blade (6').

9. Device according to one of the preceding claims, **characterised in that** a vacuum switch is provided for identifying the blade.

10. Device according to one of the preceding claims, **characterised in that** the sharpening mount (13) is secured detachably onto a mount support (30, 31).

11. Device according to one of the preceding claims, **characterised in that** the sharpening mount (13) and/or the mount support (30) is designed as a plate.

12. Device according to one of the preceding claims, **characterised in that** the mount support (13) is connected with a support pipe (31), through which vacuum is to be generated on the side of the sharpening mount (13) facing a positioned cutter blade (6').

## Revendications

1. Dispositif pour l'aiguisage de lames de machines de coupe comportant un outil d'aiguisage et un logement d'aiguisage par lequel une lame de machine de coupe est tenue pendant le processus d'aiguisage, le logement d'aiguisage et/ou l'outil d'aiguisage pouvant être déplacés l'un par rapport à l'autre et un guidage étant prévu sur ou avec l'outil d'aiguisage pour délimiter le profil de lame de machine de coupe,
**caractérisé en ce qu'**un magasin à lames de machines de coupe (1) et un outil de changement (11) sont prévus pour remplacer la lame de machine de coupe (6, 6') se trouvant dans le logement d'aiguisage (13), l'outil de changement (11) étant prévu pour saisir sur une pile des moyens (4, 5) servant à recevoir les lames de machines de coupe (1).

2. Dispositif selon la revendication 1,
**caractérisé en ce que** le magasin à lames de machines de coupe (1) comprend au moins deux plaques de magasin (4, 5).

3. Dispositif selon l'une des revendications précédentes,
**caractérisé en ce qu'**il est prévu au moins un écarteur (8) entre deux plaques de magasin (21, 22, 23).

4. Dispositif selon l'une des revendications précédentes,
**caractérisé en ce qu'**il est prévu un élément de positionnement (8) pour le positionnement exact de deux plaques de magasin (21, 22, 23) l'une par rapport à l'autre.

5. Dispositif selon l'une des revendications précédentes,
**caractérisé en ce qu'**il est prévu un élément de positionnement (9) pour le positionnement exact d'une lame de machine de coupe (6, 7) sur une plaque de magasin (4, 5).

6. Dispositif selon l'une des revendications précédentes,
**caractérisé en ce qu'**il est prévu au moins un boulon de fixation (9) sur une plaque de magasin (4, 5), lequel, lorsque l'on pose une lame de machine de coupe (6, 7), s'engage dans un évidement correspondant de la lame de machine de coupe (6, 7).

7. Dispositif selon l'une des revendications précédentes,
**caractérisé en ce que** l'outil de changement comporte un preneur par aspiration (11).

8. Dispositif selon l'une des revendications précédentes,
**caractérisé en ce que** le logement d'aiguisage (13) peut être mis en dépression au moins lorsqu'une lame (6') y est placée.

9. Dispositif selon l'une des revendications précédentes,
**caractérisé en ce qu'**il est prévu un commutateur à vide pour la détection de lames.

10. Dispositif selon l'une des revendications précédentes,
**caractérisé en ce que** le logement d'aiguisage (13) est fixé de manière amovible sur un support de logement (30, 31).

11. Dispositif selon l'une des revendications précédentes,
**caractérisé en ce que** le logement d'aiguisage (13) et/ou le support de logement (30) est réalisé sous forme de plaque.

12. Dispositif selon l'une des revendications précédentes,
**caractérisé en ce que** le support de logement (30) est relié à un tube de support (31) à travers lequel une dépression doit être créée sur le côté du logement d'aiguisage (13) orienté vers une lame de machine de coupe (6') qui y est placée.
